# EUROPEAN PATENT APPLICATION

(11) **EP 3 907 385 A1**
(43) Date of publication of application: **10.11.2021**
(21) Application number: 20173259.1
(22) Date of filing: 06.05.2020
(51) Int. Cl.: F02B 37/00, F02B 37/007, F02B 37/22, F02D 13/02, F02D 41/00, F02C 6/12, F01N 13/10

(54) **TURBOCHARGING SYSTEM FOR AN INTERNAL COMBUSTION ENGINE HAVING AN EXHAUST RECEIVER SYSTEM**

(71) Applicant: ABB Schweiz AG, 5400 Baden (CH)
(72) Inventor: MATHEY, Christoph, 5442 Fislisbach (CH)
(74) Representative: Zimmermann & Partner Patentanwälte mbB

(57) **Abstract**

Embodiments of a turbocharging system for an internal combustion engine are provided herein. The turbocharging system has at least one inlet valve and at least two exhaust valves. The turbocharging system comprises an exhaust receiver system having at least a first exhaust receiver and a second exhaust receiver, a first turbocharger, a second turbocharger and an air receiver system having at least one air receiver. The first exhaust receiver has a first exhaust receiver inlet fluidly connectable to a first exhaust valve of the internal combustion engine, and a first exhaust receiver outlet fluidly connected to a first turbine inlet of the first turbocharger. The second exhaust receiver has a second exhaust receiver inlet fluidly connectable to a second exhaust valve of the internal combustion engine, and a second exhaust receiver outlet fluidly connected to a second turbine inlet of the second turbocharger.

## Description

### Field of the Invention

Embodiments hereof relate to a turbocharging system for an internal combustion engine and an internal combustion engine.

### Background of the Invention

In order to improve or extend the operating values and/or the operating range of a charged internal combustion engine, the use of variable control times and/or variable lift curves of the intake valves and/or the exhaust valves as well as the use of register charging by means of at least two turbochargers are known.

However, the aforementioned systems have limits as well as inherent disadvantages:
With variable valve control, the opening and closing times of the valves are limited by the possible deterioration of the operating values, especially those of consumption.

With regard to the valve lift curve, the effectiveness of this variation is limited by a possible contact between piston and valve and by the maximum lift of the valve, where no further increase in mass flow can be realised. An additional limiting factor is the operating range of the corresponding charging systems (or charging modules).

Register charging with two or more charging modules is usually switched on and off by means of flaps on the intake (charged air) side and exhaust side. These flaps tend to leak, are relatively large and their synchronisation can be problematic. In addition, there are substantial changes in the charging pressure when switching one charging module off and another charging module on. The substantial changes can have a negative effect on the operating values of the engine and can restrict service life due to the high LCF (low-cycle-fatigue) load on the turbochargers.

By providing additional features such as a wastegate and/or a bypass, the disadvantages can be partially mitigated, but lead to increased complexity and a greater control and monitoring effort.

In addition, turbochargers that are switched off tend to lose oil and have worn radial bearings if they do not rotate.

### Brief Summary of the Invention

Briefly, a turbocharging system and an internal combustion engine are provided to overcome at least some of the abovementioned limitations, and in particular enable extending the operating range of the turbocharging system and/or the internal combustion engine. This object is accomplished by means of a turbocharging system for an internal combustion engine according to claim 1.

According to an embodiment, a turbocharging system for an internal combustion engine is provided. The turbocharging system has at least one inlet valve and at least two exhaust valves. Further, the turbocharging system comprises an exhaust receiver system having at least a first exhaust receiver and a second exhaust receiver, a first turbocharger, a second turbocharger, and an air receiver system having at least one air receiver. The first exhaust receiver has a first exhaust receiver inlet fluidly connectable to a first exhaust valve of the internal combustion engine, and a first exhaust receiver outlet fluidly connected to a first turbine inlet of the first turbocharger. The second exhaust receiver has a second exhaust receiver inlet fluidly connectable to a second exhaust valve of the internal combustion engine, and a second exhaust receiver outlet fluidly connected to a second turbine inlet of the second turbocharger. The air receiver system has a first air receiver inlet fluidly connected to a first impeller outlet of the first turbocharger, and a first air receiver outlet fluidly connectable to the at least one inlet valve of the internal combustion engine. The air receiver system has a second air receiver inlet fluidly connected to a second impeller outlet of the second turbocharger. Optionally the air receiver system has a second air receiver outlet fluidly connectable to the at least one inlet valve of the internal combustion engine.

Those skilled in the art will recognise additional features and advantages upon reading the following detailed description, and upon viewing the accompanying drawings.

### Brief Description of the Drawings

The components in the Figures are not necessarily to scale, instead emphasis being placed upon illustrating the principles of the invention. Moreover, in the Figures, like reference signs designate corresponding parts. In the drawings:
Figure 1 illustrates a turbocharging system and an internal combustion engine system according to an embodiment of the present disclosure.
Figure 2 illustrates a turbocharging system and an internal combustion engine system according to an embodiment of the present disclosure.

### Detailed Description of the Invention

In the following detailed description, reference is made to the accompanying drawings, which form a part hereof, and in which are shown by way of illustration specific embodiments of the invention.

As used herein, the terms "having", "containing", "including", "comprising" and the like are open ended terms that indicate the presence of stated elements or features, but do not preclude additional elements or features.

It is to be understood that other embodiments may be utilised, and structural or logical changes may be made without departing from the scope of the present invention. The following detailed description, therefore, is not to be taken in a limiting sense, and the scope of the present invention is defined by the appended claims. The embodiments described herein use specific language, which should not be construed as limiting the scope of the appended claims. Each embodiment and each aspect so defined may be combined with any other embodiment or with any other aspect unless clearly indicated to the contrary.

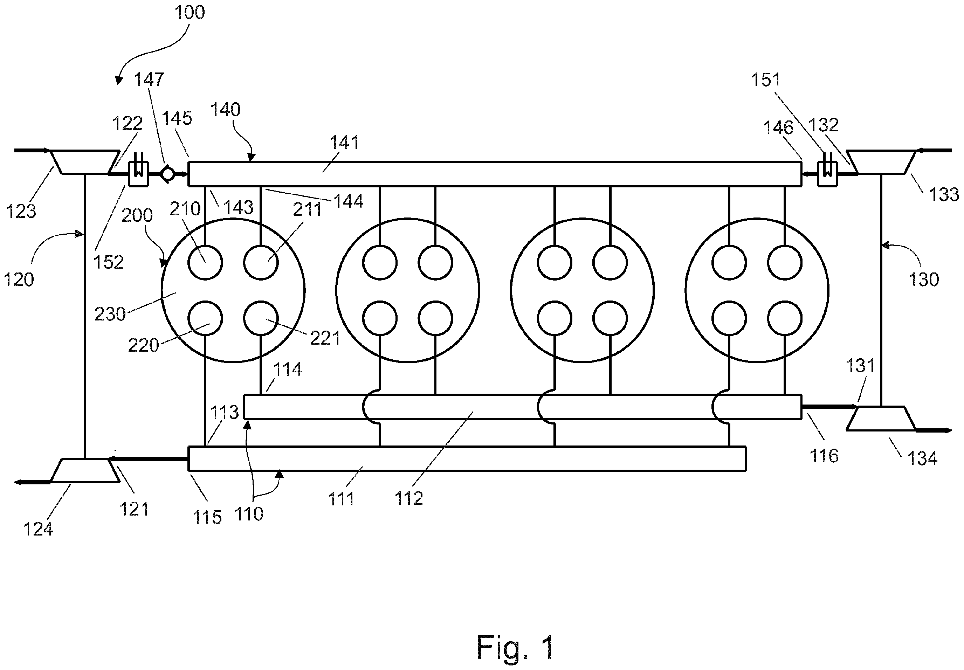

Figure 1 shows a turbocharging system 100 for an internal combustion engine 200 according to an embodiment of the present disclosure. The turbocharging system 100 has at least two turbochargers. The turbocharging system shown in Figure 1 includes a first turbocharger 120 and a second turbocharger 130. The turbocharging system 100 is connectable to an internal combustion engine 200 having at least one inlet valve 210, 211 and at least two exhaust valves 220, 221.

The first turbocharger 120 includes a first impeller 123 and a first impeller outlet or compressor outlet 122. The first turbocharger 120 further has a first turbine 124 and a first turbine inlet 121. The first turbocharger 120 may include a cooler 152 for cooling the compressed or charged air arranged downstream of the first impeller outlet 122. The second turbocharger 130 includes a first impeller 133 and a first impeller outlet or compressor outlet 132, and a first turbine 134 and a first turbine inlet 131. The second turbocharger 130 may include a cooler 151 for cooling the compressed or charged air arranged downstream of the second impeller outlet 132.

The turbocharging system 100 further includes an exhaust receiver system 110 having at least a first exhaust receiver 111 and a second exhaust receiver 112. The exhaust receiver system 110 may have further exhaust receivers if the turbocharging system 100 has more than two turbochargers.

The first exhaust receiver 111 has a first exhaust receiver inlet 113 and a first exhaust receiver outlet 115. The first exhaust receiver inlet 113 is fluidly connectable to a first exhaust valve 220 of the internal combustion engine 200. The first exhaust receiver outlet 115 is fluidly connected to the first turbine inlet 121. The first exhaust receiver 111 is configured for conveying exhaust gas from a cylinder 230 of the internal combustion engine 200 to the turbine 124 of the first turbocharger 120.

The second exhaust receiver 112 has a second exhaust receiver inlet 114 and a second exhaust receiver outlet 116. The second exhaust receiver inlet 114 is fluidly connectable to a second exhaust valve 221 of the internal combustion engine 200. The second exhaust receiver outlet 116 is fluidly connected to the second turbine inlet 131. The second exhaust receiver 112 is configured for conveying exhaust gas from the cylinder 230 of the internal combustion engine 200 to the turbine 134 of the second turbocharger 130.

The first exhaust receiver 111 and the second exhaust receiver 112 are provided separate from another. According to a general aspect, the first exhaust receiver 111 and the second exhaust receiver 112 are not in fluid communication with another (apart from potentially being in fluid connection via the cylinder 230 of the internal combustion engine 200, in case the first and the second exhaust receivers 111, 112 are connected to exhaust valves 220, 221 and the first and second exhaust valves 220, 221 are open at the same time).

Embodiments of the present disclosure do not require arranging flaps in the exhaust receiver system 110 and more generally in any portion of a gas supply line leading from the cylinder of the internal combustion engine 200 to any of the turbochargers. The provision of separate first and second exhaust receivers 111, 112, and in particular of separate respective connections between first exhaust receiver 111 and first exhaust valve 220 and between second exhaust receiver 112 and second exhaust valve 221, enables control of the switching on and off of the turbochargers of the turbocharging system 100 without the need for flaps. Prior art systems utilise an exhaust receiver corresponding to a single volume, which require flaps (between the exhaust receiver and turbine and/or between compressor and air receiver) to start (switch on) and stop (switch off) a further turbocharger. According to the present disclosure, the respective (first, second,...) turbocharger may be switched off by blocking flow through the respective (first, second,...) exhaust receiver. In this case, the internal combustion engine 200 may be operated with just one turbocharger. As disclosed further below, the first and second exhaust receivers 111, 112 also allows for individual control of the switching on and off of the turbochargers of the turbocharging system 100. Flaps disadvantageously merely allow for conveying air to one turbocharger in a controlled manner at a given point in time. The problem of leaking flaps associated with prior art systems are overcome by the embodiments of the present disclosure, resulting in an increase of the operational safety of the turbocharging system 100 and/or the internal combustion engine 200.

The turbocharging system 100 further includes an air receiver system 140 having at least one air receiver 141. The air receiver system 140 is configured for conveying compressed or charged air from an impeller outlet 122, 132 of one or more of the turbochargers 120, 130 to the cylinder 230 of the internal combustion engine.

The air receiver system 140, and in particular the air receiver 141, has a first air receiver inlet 145 and a first air receiver outlet 143. The first air receiver inlet 145 is fluidly connected to a first impeller outlet 122 of the first turbocharger 120. The first air receiver outlet 143 is fluidly connectable to the at least one inlet valve 210, 211 of the internal combustion engine 200. The air receiver system 140 has a second air receiver inlet 146 fluidly connected to a second impeller outlet 132 of the second turbocharger 130.

Optionally, the air receiver system 140 has a second air receiver outlet 144 fluidly connectable to the at least one inlet valve 210, 211 of the internal combustion engine 200. Figure 1 illustrates the turbocharging system 100 including the first air receiver outlet 143 and the second air receiver outlet 144. In another exemplary embodiment, the turbocharging system 100 may also not include the second air receiver outlet 144.

According to one embodiment, the air receiver system 140 has a joint air receiver 141 having the first air receiver inlet 145, the second air receiver inlet 146, the first air receiver outlet 143 and, if present, the second air receiver outlet 144. Figure 1 illustrates an embodiment of the air receiver system 140 having a joint air receiver 141. This embodiment may be utilised for internal combustion engines having one inlet valve (per cylinder).

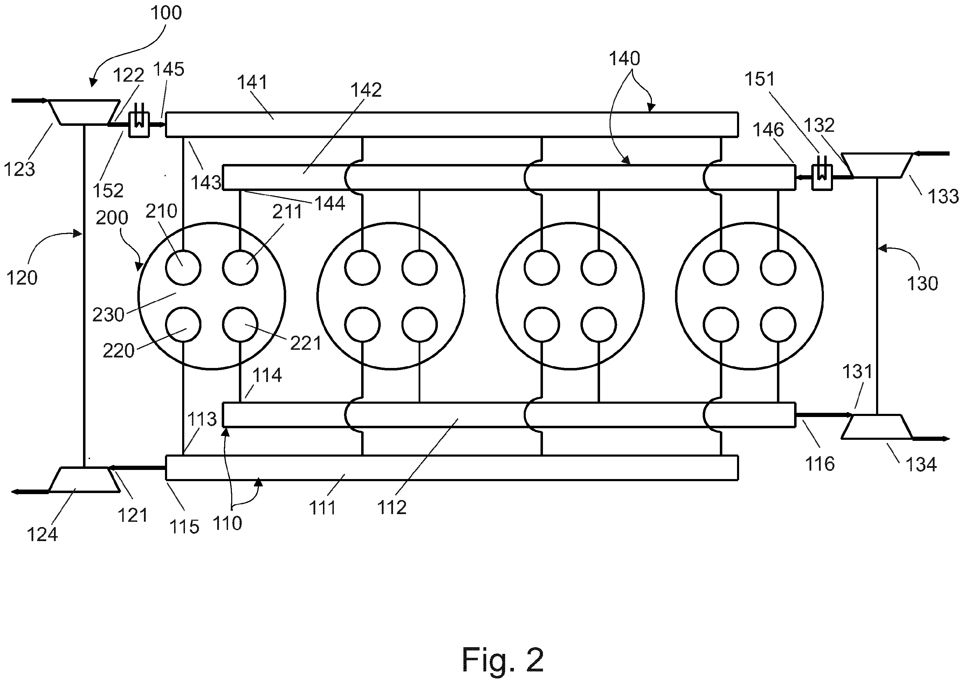

The turbocharging system 100 may be connectable to an internal combustion engine 200 having at least two inlet valves 210, 211 and at least two exhaust valves 220, 221. According to an aspect, the air receiver system 140 has at least a first air receiver 141 and a second air receiver 142. Figure 2 illustrates an embodiment of the air receiver system 140 including the first air receiver 141 and the second air receiver 142.

The first air receiver 141 and the second air receiver 142 are provided separate from another. According to a general aspect, the first air receiver 141 and the second air receiver 142 are not in fluid communication with another (apart from potentially being in fluid connection via the cylinder 230 of the internal combustion engine 200, in case the first and the second inlet receivers 141, 142 are connected to inlet valves 210, 211 and the first and second inlet valves 210, 211 are open at the same time).

The first air receiver 141 includes the first air receiver inlet 145, and the first air receiver outlet 143 fluidly connectable to a first inlet valve 210 of the internal combustion engine 200. The second air receiver 142 includes the second air receiver inlet 146, and the second air receiver outlet 144 fluidly connectable to a second inlet valve 211 of the internal combustion engine 200.

Embodiments of the present disclosure do not require arranging flaps in the air receiver system 140 and more generally in any portion of a gas supply line leading from any of the turbochargers to the cylinder of the internal combustion engine 200, besides a throttle flap. The problem of leaking flaps associated with prior art systems may be overcome by embodiments of the present disclosure.

According to one aspect, the turbocharging system includes a valve 147 to enable blocking flow of a fluid from the air receiver system 140 to the first impeller 123. The valve may be arranged between the first air receiver inlet 145 and the first impeller outlet 122 of the first turbocharger 120. The valve 147 is preferably provided in embodiments of the air receiver system 140 having a joint air receiver (as illustratively shown in Figure 1). The valve 147 may be configured to close when the second turbocharger 130 is switched on and the first turbocharger 130 is switched off. The valve 147 may be a check valve 147 or one-way valve.

The turbocharger system may further include a variable valvetrain (not shown in the figures). The variable valvetrain is configured for controlling properties of the at least one inlet valve 210, 211 and/or the at least two exhaust valves 220, 221. The variable valve train may include a valve actuating mechanism configured for opening and closing the one or more inlet and/or exhaust valves 210, 211, 220, 221. The variable valvetrain may include separate means for each of the respective inlet and exhaust valves to be controlled by the variable valve train. The means may be respectively connectable to each of the one or more inlet and/or exhaust valves 210, 211, 220, 221.

According to one aspect, the variable valvetrain may additionally be configured for shifting the opening time and/or the closing time of the one or more inlet and/or exhaust valves 210, 211, 220, 221. The variable valvetrain may be configured for shifting the operation of the inlet valve (i.e. shifting both the opening and closing time by a certain amount). Alternatively, the variable valvetrain may be configured for shifting the opening time or the closing time of one or more of the inlet and exhaust valves. For example, the variable valvetrain may include a delay element for shifting the closing movement of the one or more inlet and/or exhaust valves 210, 211, 220, 221. The delay element may be for example be a mechanic or hydraulic delay element. The variable valve train may include a valve actuating mechanism for each of the one or more inlet and exhaust valves, wherein the delay element may be configured for contacting the valve actuating mechanism for delaying the closing movement of the one or more inlet and/or exhaust valves 210, 211, 220, 221.

According to another aspect, the variable valvetrain may additionally be configured for varying a lift profile of the one or more inlet and/or exhaust valves 210, 211, 220, 221.

According to an embodiment, the turbocharging system 100 further includes a variable valvetrain for the internal combustion engine 200. The variable valvetrain is operable in a plurality of valve operation modes.

In one aspect, the variable valvetrain is operable in a first-exhaust-valve operation mode in which the first exhaust valve 220 is opened for enabling a flow of exhaust gas from the internal combustion engine 200 through the first exhaust receiver 111 to the first turbine 124 for driving the first turbine 124. The first exhaust valve 220 is typically opened intermittently during the first-exhaust-valve operation mode to drive the first turbine 124. Further, the variable valvetrain may be operable in a first-exhaust-valve blocking mode in which the first exhaust valve 220 is closed for blocking the flow of exhaust gas from the internal combustion engine 200 to the first turbine 124. The first exhaust valve 220 is typically continuously closed during the first-exhaust-valve blocking mode to switch off the first turbine 124 or maintain the first turbine 124 in a switched off mode.

In one aspect, the variable valvetrain is operable in a second-exhaust-valve operation mode in which the second exhaust valve 221 is opened for enabling a flow of exhaust gas from the internal combustion engine 200 through the second exhaust receiver 112 to the second turbine 134 for driving the second turbine 134. The second exhaust valve 221 is typically opened intermittently during the second-exhaust-valve operation mode to drive the second turbine 124. Further, the variable valvetrain may be operable in a second-exhaust-valve blocking mode in which the second exhaust valve 221 is closed for blocking the flow of exhaust gas from the internal combustion engine 200 to the second turbine 134. The second exhaust valve 221 is typically continuously closed during the second-exhaust-valve blocking mode to switch off the second turbine 134 or maintain the second turbine 124 in a switched off mode.

Preferably, the variable valvetrain is configured for enabling the first-exhaust-valve operation and blocking mode and the second-exhaust-valve operation and blocking mode independently of each other. In particular, the variable valve train may be configured for intermittently opening the first exhaust valve 220 and the second exhaust valve 221 during operation of the internal combustion engine. One of the first and second exhaust valves 220, 221 may be intermittently opened for a substantially shorter amount of time compared to the other exhaust valve. This mode of operation allows for conveying exhaust gas for a short amount of time to the turbocharger that is switched off to keep the turbine and thereby the impeller in rotation. Advantageously, a loss or leakage of oil is prevented by keeping the turbine and the impeller in rotation even when the turbocharger is not in operation and protects the bearings from wearing. In addition, the turbine is thermally pre-conditioned when kept in rotation, which prevents thermal shock effects and facilitates taking the turbocharger into operation (during a ramp-up stage). Advantageously, the operating values of the engine may be improved and the service life of the turbochargers increased.

In one aspect, the variable valvetrain is operable in an inlet-valve operation mode in which the at least one inlet valve 210, 211 is opened for enabling a flow of air from the first impeller outlet 122 or the second impeller outlet 132 through the air receiver system 140 to the internal combustion engine 200. Further, the variable valvetrain may be operable in an inlet-valve blocking mode in which the at least one inlet valve 210, 211 is closed for blocking the flow of air from a first impeller 123 and/or a second impeller 133 to the internal combustion engine 200. The at least one inlet valve 210, 211 is typically opened intermittently during the inlet-valve operation mode and the inlet-valve blocking mode. Preferably, the variable valvetrain is configured for enabling the inlet-valve operation and blocking mode and the first-exhaust-valve operation and blocking mode and the second-exhaust-valve operation and blocking mode independently of each other.

In one aspect, the variable valvetrain is operable in a second-inlet-valve operation mode. In this aspect, the inlet-valve operation mode may also be referred to as first-inlet-valve operation mode. According to this aspect, the air receiver system 140 has at least the first air receiver 141 and the second air receiver 142. In the first-inlet-valve operation mode the first inlet valve 210 is opened for enabling a flow of air from the first impeller outlet 122 through the first air receiver 141 to the internal combustion engine 200. The variable valvetrain is operable in a second-inlet-valve operation mode in which the second inlet valve 211 is opened for enabling a flow of air from the second impeller outlet 132 through the second air receiver 142 to the internal combustion engine 200. Further, the variable valvetrain may be operable in a second-inlet-valve blocking mode in which the second inlet valve 211 is closed for blocking the flow of air from the second impeller 133 to the internal combustion engine 200. Preferably, the variable valvetrain is configured for enabling the inlet-valve operation and blocking mode and the second-inlet-valve operation and blocking mode independently of each other.

The variable valvetrain is typically configured for enabling any of the (first-) inlet-valve operation mode, the second-inlet-valve operation, the first-exhaust-valve operation mode and the second-exhaust-valve operation and any of the corresponding blocking operations independently of each other. Further, in embodiments including the variable valvetrain being additionally configured for shifting the opening time and/or the closing time and/or varying the lift profile of the one or more inlet and/or exhaust valves 210, 211, 220, 221, the shifting and/or varying may be enabled for any of the one or more inlet and/or exhaust valves 210, 211, 220, 221, independent of any of the other inlet and/or exhaust valves 210, 211, 220, 221.

In the following, some preferred embodiments of the present disclosure are summarised:
1) The turbocharging system 100 according to any embodiment disclosed herein, for an internal combustion engine 200 having at least two inlet valves 210, 211, wherein the air receiver system 140 has at least the first air receiver 141 and a second air receiver 142, and the exhaust receiver system 110 has at least the first exhaust receiver 111 and the second exhaust receiver 112. The valvetrain is configured for enabling any of the first-inlet-valve operation mode, the second-inlet-valve operation, the first-exhaust-valve operation mode and the second-exhaust-valve operation individually. The opening times, the closing times and the lift profile are fixed, i.e. non-variable.
2) The turbocharging system 100 according to any embodiment disclosed herein, for an internal combustion engine 200 having at least two inlet valves 210, 211, wherein the air receiver system 140 has at least the first air receiver 141 and a second air receiver 142, and the exhaust receiver system 110 has at least the first exhaust receiver 111 and the second exhaust receiver 112. The valvetrain is configured for enabling any of the first-inlet-valve operation mode, the second-inlet-valve operation, the first-exhaust-valve operation mode and the second-exhaust-valve operation individually. The valvetrain is configured for varying the opening times and/or the closing times and/or the lift profile of either one of the inlet valves (e.g. inlet valve 210) or one of the exhaust valves (e.g. exhaust valve 220) or of one inlet valve and one exhaust valve individually, i.e. in a freely predeterminable manner.
3) The turbocharging system 100 according to any embodiment disclosed herein, for an internal combustion engine 200 having at least two inlet valves 210, 211, wherein the air receiver system 140 has at least the first air receiver 141 and a second air receiver 142, and the exhaust receiver system 110 has at least the first exhaust receiver 111 and the second exhaust receiver 112. The valvetrain is configured for enabling any of the first-inlet-valve operation mode, the second-inlet-valve operation, the first-exhaust-valve operation mode and the second-exhaust-valve operation individually. The valvetrain is configured for varying the opening times and/or the closing times and/or the lift profile of any of the inlet valves (e.g. inlet valves 210, 211) or of any of the exhaust valves (e.g. exhaust valves 220, 221) or of any inlet and exhaust valves (e.g. inlet valves 210, 211 and exhaust valves 220, 221) individually, i.e. in a freely predeterminable manner and independent of the other one or more inlet and exhaust valves.

According to an embodiment, the turbocharger system 100 may include a control unit configured to control the variable valvetrain. The control unit may be configured to control the opening and closing and optionally shift the opening time and/or the closing time or vary the lift profile of any of the one or more inlet and exhaust valves 210, 211, 220, 221, in particular independent of each other. Advantageously, the turbocharger system 100 according to embodiments of the present disclosure may be put into practise utilising just one control unit, i.e. without the need for providing a plurality of control units. Prior art systems including flaps in the exhaust receiver system require a control unit configured for controlling the flaps.

Turbocharger systems according to the present disclosure allow for omitting flaps in the exhaust receiver system and/or the air receiver system and thus overcome issues related to untight flaps. Further, synchronising is substantially simplified, as the turbocharger system is configured to control switching on and off of the turbochargers by means of the inlet and exhaust valves. The mechanical design is simplified by omitting the flaps, and thereby additionally enables reducing the costs of manufacture. The design of the turbocharger system is also more robust by omitting the flaps, in particular at high operating temperatures.

Further, drawbacks of systems utilising control of valve timing or the valve lift curves may be overcome. The operating range is substantially extended according to the present disclosure, in particular for embodiments including a combination of variable valve timing and having a plurality of turbo chargers which may be activated and deactivated by means of any of the (inlet and) exhaust valves of the internal combustion engine individually.

Further, the turbocharger systems according to the present disclosure enables realising an internal exhaust gas recirculation, i.e. within a combustion chamber of the internal combustion engine. Individual control or modulation of the opening and closing times of the exhaust valves and/or inlet valves permits backflow of exhaust gas into the combustion chamber of the internal combustion engine. Control of the opening and closing times of the exhaust valves and/or inlet valves further permits varying a flushing or rinsing phase, by allowing for a partial time overlap between a closing movement of the exhaust valve and an opening movement of the inlet valve. Moreover, swirl and turbulence control may be obtained in the combustion chamber to facilitate combustion by means of individual control or modulation of the opening and closing times of the exhaust valves and/or inlet valves.

According to an embodiment, an internal combustion engine system is provided. The internal combustion engine system has an internal combustion engine 200 with at least one, preferably at least two, inlet valve 210, 211 and at least two exhaust valves 220, 221. The internal combustion engine system further includes the turbocharging system 100 according to any embodiment of the present disclosure. In an exemplary embodiment, the internal combustion engine 200 is a diesel engine. In another exemplary embodiment, the internal combustion engine 200 is gas engine. In a further exemplary embodiment, the internal combustion engine 200 is a duel-fuel engine.

The internal combustion engine system may further include a first cylinder 230. The at least one, preferably at least two, inlet valves 210, 211 and the at least two exhaust valves 220, 221 correspond to the first cylinder 230.

The internal combustion engine system may include a plurality of cylinders, as for example illustrated in Figures 1 and 2. The internal combustion engine 200 comprises at least one inlet valve 210, 211 and at least two exhaust valves 220, 221 for each cylinder. The first exhaust receiver 111 of the turbocharger system 100 may be connected to an exhaust valve 220 of each cylinder. The second exhaust receiver 112 of the turbocharger system 100 may be connected to another exhaust valve 221 of each cylinder. The exhaust receiver system 110 may be configured to convey exhaust gas from all of the cylinders to the respective turbines 124, 134 of the turbocharging system 100. The air receiver system 140 may be configured for conveying compressed or charged air from the impeller outlet 122, 132 of one or more of the turbochargers 120, 130 to each of the plurality of cylinders 230 of the internal combustion engine 200.

The internal combustion engine system may be configured to control the opening and closing, and optionally the valve timing and/or the valve lift curve, of the one or more inlet and exhaust valves of one cylinder independent of the opening and closing, and optionally the valve timing and/or the valve lift curve, of the one or more inlet and exhaust valves of any other cylinder of the internal combustion engine 200. For example, the exhaust valve of only one cylinder may be intermittently opened to convey exhaust gas to a turbocharger that is switched off for a short amount of time to keep the turbine and thereby the impeller in rotation.

## Claims

1. A turbocharging system (100) for an internal combustion engine (200) having at least one inlet valve (210, 211) and at least two exhaust valves (220, 221), the turbocharging system (100) comprising:
- an exhaust receiver system (110) having at least a first exhaust receiver (111) and a second exhaust receiver (112);
- a first turbocharger (120);
- a second turbocharger (130); and
- an air receiver system (140) having at least one air receiver (141),
wherein the first exhaust receiver (111) has a first exhaust receiver inlet (113) fluidly connectable to a first exhaust valve (220) of the internal combustion engine (200), and a first exhaust receiver outlet (115) fluidly connected to a first turbine inlet (121) of the first turbocharger (120), and
wherein the second exhaust receiver (112) has a second exhaust receiver inlet (114) fluidly connectable to a second exhaust valve (221) of the internal combustion engine (200), and a second exhaust receiver outlet (116) fluidly connected to a second turbine inlet (131) of the second turbocharger (130), and
wherein the air receiver system (140) has a first air receiver inlet (145) fluidly connected to a first impeller outlet (122) of the first turbocharger (120), and a first air receiver outlet (143) fluidly connectable to the at least one inlet valve (210, 211) of the internal combustion engine (200), and wherein
the air receiver system (140) has a second air receiver inlet (146) fluidly connected to a second impeller outlet (132) of the second turbocharger (130), and optionally a second air receiver outlet (144) fluidly connectable to the at least one inlet valve (210, 211) of the internal combustion engine (200).

2. The turbocharging system according to claim 1, further comprising a variable valvetrain for the internal combustion engine (200), wherein
the variable valvetrain is operable
in a first-exhaust-valve operation mode in which the first exhaust valve (220) is opened for enabling a flow of exhaust gas from the internal combustion engine (200) through the first exhaust receiver (111) to the first turbine (124) for driving the first turbine (124), and
in a first-exhaust-valve blocking mode in which the first exhaust valve (220) is closed for blocking the flow of exhaust gas from the internal combustion engine (200) to the first turbine (124).

3. The turbocharging system according to claim 2, wherein
the variable valvetrain is operable
in a second-exhaust-valve operation mode in which the second exhaust valve (221) is opened for enabling a flow of exhaust gas from the internal combustion engine (200) through the second exhaust receiver (112) to the second turbine (134) for driving the second turbine (134), and
in a second-exhaust-valve blocking mode in which the second exhaust valve (221) is closed for blocking the flow of exhaust gas from the internal combustion engine (200) to the second turbine (134), and
wherein the variable valvetrain is configured for enabling the first-exhaust-valve operation mode and the second-exhaust-valve operation independently of each other.

4. The turbocharging system according to any one of the preceding claims, wherein
the variable valvetrain is operable
in an inlet-valve operation mode in which the at least one inlet valve (210, 211) is opened for enabling a flow of air from the first impeller outlet (122) or the second impeller outlet (132) through the air receiver system (140) to the internal combustion engine (200), and
in an inlet-valve blocking mode in which the at least one inlet valve (210, 211) is closed for blocking the flow of air from a first impeller (123) and/or a second impeller (133) to the internal combustion engine (200).

5. The turbocharging system according to any one of the preceding claims, wherein the air receiver system (140) has a joint air receiver having the first air receiver inlet (145), the second air receiver inlet (146), the first air receiver outlet (143) and the second air receiver outlet (144).

6. The turbocharging system according to any one of claims 1 to 4, for an internal combustion engine (200) having at least two inlet valves (210, 211), wherein
the air receiver system (140) has at least a first air receiver (141) and a second air receiver (142), and wherein
the first air receiver (141) has the first air receiver inlet (145), and the first air receiver outlet (143) fluidly connectable to a first inlet valve (210) of the internal combustion engine (200), and wherein
the second air receiver (142) has the second air receiver inlet (146), and the second air receiver outlet (144) fluidly connectable to a second inlet valve (211) of the internal combustion engine (200).

7. The turbocharging system according to claim 6, wherein
the variable valvetrain is operable
in a second-inlet-valve operation mode in which the second inlet valve (211) is opened for enabling a flow of air from the second impeller outlet (132) through the second air receiver (142) to the internal combustion engine (200), and
in a second-inlet-valve blocking mode in which the second inlet valve (211) is closed for blocking the flow of air from the second impeller (133) to the internal combustion engine (200), and
wherein the variable valvetrain is configured for enabling the inlet-valve operation mode and the second-inlet-valve operation independently of each other.

8. The turbocharging system according to any one of the preceding claims, wherein
the variable valvetrain is configured for enabling any of the inlet-valve operation mode, the second-inlet-valve operation, the first-exhaust-valve operation mode and the second-exhaust-valve operation independently of each other.

9. The turbocharging system according to any one of the preceding claims, wherein the variable valvetrain is further configured to shift the opening time and/or the closing time of the at least one inlet valve (210, 211) and/or the at least two exhaust valves (220, 221), in particularly independent of each other.

10. The turbocharging system according to any one of claims 1 to 9, wherein the variable valvetrain is further configured to vary a lift profile of the at least one inlet valve (210, 211) and/or the at least two exhaust valves (220, 221), in particular independent of each other.

11. The turbocharging system according to any one of the preceding claims, further comprising a valve (147) to block flow of a fluid from the air receiver system (140) to the first impeller (123).

12. The turbocharging system according to any one of the preceding claims, wherein the exhaust receiver (110) does not comprise a flap and/or wherein the air receiver system (140) does not comprise a flap besides a throttle valve.

13. The turbocharging system according to any one of the preceding claims, further comprising a control unit configured to control the variable valvetrain.

14. An internal combustion engine system having an internal combustion engine (200) with at least one inlet valve (210, 211) and at least two exhaust valves (220, 221), and the turbocharging system (100) according to any one of the preceding claims.

15. The internal combustion engine system according to claim 14, further comprising a first cylinder (230), wherein the at least one inlet valve (210, 211) and at least two exhaust valves (220, 221) correspond to the first cylinder (230).
